# EUROPÄISCHE PATENTSCHRIFT

(11) **EP 1 073 958 B1**
(45) Veröffentlichungstag und Bekanntmachung des Hinweises auf die Patenterteilung: **15.01.2003**
(21) Anmeldenummer: 99929040.6
(22) Anmeldetag: 28.04.1999
(51) Int. Cl.: G06F 11/36

(54) **RISC-PROZESSOR MIT EINER DEBUG-SCHNITTSTELLENEINHEIT**
RISC PROCESSOR WITH A DEBUG INTERFACE UNIT
PROCESSEUR RISC AVEC UNE UNITE D'INTERFACE DE MISE AU POINT

(30) Priorität: 30.04.1998 DE 19819531
(43) Veröffentlichungstag der Anmeldung: 07.02.2001
(73) Patentinhaber: SIEMENS AKTIENGESELLSCHAFT, 80333 München (DE)
(72) Erfinder: HAAS, Peter, D-85570 Markt Schwaben (DE)
(86) Internationale Anmeldenummer: DE9901252
(87) Internationale Veröffentlichungsnummer: WO99057638

(56) Entgegenhaltungen:
- EP-A- 0 764 903
- US-A- 5 564 028
- CIRCELLO J C ET AL: "A MECHANISM TO OUTPUT INTERNAL STATE INFORMATION DURING IDLE BUS CYCLES" MOTOROLA TECHNICAL DEVELOPMENTS, Bd. 22, 1. Juni 1994 (1994-06-01), Seiten 24-26, XP000456705

## Beschreibung

Vielschichtige Vermittlungsprozeduren und komplexe Datenprotokolle, insbesondere in Vermittlungsanlagen, werden von Prozessoren oder von Reduced Instruction Set Computern ausgeführt. Ein Reduced Instruction Set Computer wird nachfolgend als RISC-Prozessor bezeichnet. Der RISC-Prozessor wird für den geringstmöglichen Energie- und Platzbedarf dimensioniert und für seinen jeweiligen Verwendungszweck optimiert. Um mögliche Fehler bei komplexen Verarbeitungsprozeduren schnell aufzufinden, ist es hilfreich, wenn die innerhalb des RISC-Prozessors ablaufenden Datenverarbeitungsprozeduren extern nachvollziehbar sind. Um ablaufende Datenverarbeitungsprozeduren bei einer Fehlersuche nachvollziehen zu können, braucht man jedoch eine Vielzahl von Abfragemöglichkeiten zu den Registerinhalten des RISC-Prozessors. Die Zugangsmöglichkeiten zu den in der Pipeline des RISC-Prozessors jeweils in den Registern zwischengespeicherten Daten gestaltet sich jedoch sehr schwierig, da während einer Fehlersuche auf Registerinhalte an verschiedenen Stellen der Pipeline des RISC Prozessors zugegriffen werden muß. Die Zugriffsmöglichkeit zu den in der Pipeline des RISC-Prozessors abgespeicherten Registerdaten werden zudem um ein Vielfaches erschwert, wenn der RISC-Prozessor zusammen mit einem Programmspeicher in einem ASIC-Baustein integriert ist.

Aus der US-Patentschrift 5,564,028 ist ein Prozessor mit Pipeline-Struktur bekannt, bei dem Unterbrechungen für Debugzwecke nur für ausgeführt Befehle aktiv werden.

*Aus der europäischen Patentanmeldung EP 07 64 903 A1 ist ein RISC-Prozessor mit einer Debug-Schnittstelleneinheit bekannt.*

Der Erfindung liegt die Aufgabe zugrunde, einen RISC-Prozessor mit einer Debug-Schnittstelleneinheit anzugeben.

Die Aufgabe wird durch die Merkmale der Patentansprüche 1 und 2 gelöst.

Die Erfindung bringt den Vorteil mit sich, daß die Registerinhalte in Realtime mitgelesen werden können.

Die Erfindung bringt den Vorteil mit sich, daß die Fläche eines RISC-Prozessors lediglich um die Fläche eines Pin's vergrößert werden muß, wenn die Ein- und Ausgabeschnittstelle I des RISC-Prozessors mitbenutzt wird.

Die Erfindung bringt den Vorteil mit sich, daß mit den nach außen geführten Kommandodaten, Adressdaten und den dazugehörigen Ergebnis-, Ziel und Quelldaten alle notwendigen Informationen zu einer effizienten Fehlersuche bereitgestellt werden.

Weitere Besonderheiten sind in den Unteransprüchen angegeben.

Die Schaltungsanordnung und das Verfahren werden aus der nachfolgenden näheren Erläuterung zu einem Ausführungsbeispiel anhand von Zeichnungen ersichtlich.

Es zeigen:
- Figur 1: einen Aufbau eines RISC-Prozessors und
- Figur 2: einen Aufbau einer Debug-Schnittstelleneinheit.

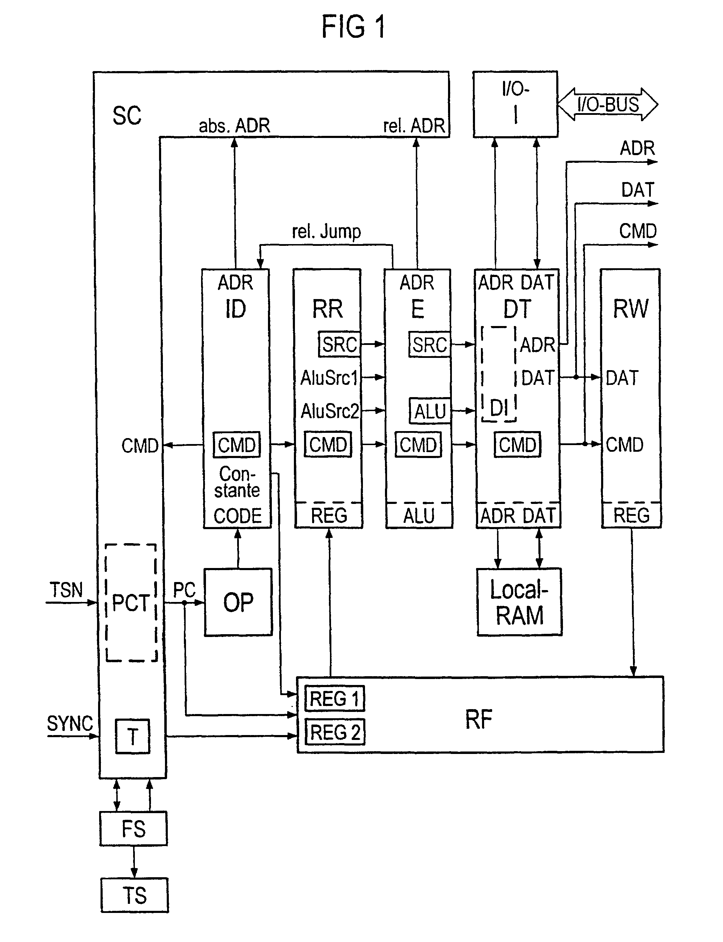

In Figur 1 ist schematisch ein Aufbau eines RISC-Prozessors dargestellt. In dieser Darstellung sind die Wesentlichen, in einer Pipeline des RISC-Prozessors angeordneten Komponenten wiedergegeben. Die Komponenten umfassen ein Sequenzcontroller SC, ein Instruction-Decoder ID, eine Register-Read-Einheit RR, eine Execute-Einheit E, eine beispielsweise in einer Datentransfer-Einheit DT angeordneten Debug-Schnittstelleneinheit DI, eine Register-Write-Einheit RW, eine Eingabe- und Ausgabeeinheit I/O sowie ein Register-File RF.

Der Sequence-Controller SC liefert im Wesentlichen für den Instruction-Dekoder ID eine Adresse zum Auslesen eines Befehlscode aus einem Opcode-Speicher OP. Der Opcode-Speicher OP ist beispielsweise in einem Bereich eines Speicherbausteins ROM angeordnet. Aus dem Befehlscode werden im Instruction-Decoder ID Kommandos CMD0, CMD1, CMD2 für die einzelnen in der Pipeline angeordneten Einheiten gebildet. Die Kommandodaten CMDx werden dann vom Instruction-Decoder ID nach links und rechts an die jeweils in der Pipeline angeordneten Einheiten RR, E, DT, DI, RW oder SC weitergeleitet. Für jede dieser Einheiten RR, E, DT, DI, RW oder SC wird dazu ein Kommandofeld erstellt. Nach rechts gehen z.B. Kommandofelder für die Register-Read-Einheit RR, für die Execute-Einheit E, für die Datentranfereinheit DT und für die Register-Write-Einheit RW, während nach links das Kommandofeld für direkte Sprungbefehle weitergereicht wird. Von der Register-Read-Einheit RR werden Kommandos CMDn aus dem Register-File RF gelesen und an die Execute-Einheit E weitergeleitet. In der Execute-Einheit E werden alle arithmetischen und logischen Befehle, d.h. alle Additions- und Subtraktionsbefehle sowie alle logischen Verknüpfungen ausgeführt.

Im beschriebenen RISC-Prozessor ist beispielsweise ein erstes Bussystem mit einem Adreßbus zwischen Programmcounter PCT und dem Opcode-Speicher OP und einem Datenbus zwischen dem Opcode-Speicher OP und dem Instruction-Decoder ID sowie ein weiteres Bussystem mit einem Adressbus und einem Datenbus zwischen der Datentransfereinheit DT und der Ein- und Ausgabeeinheit I angeordnet. Mit Hilfe eines weiteren Bussystems, dem Kommand-Bus wird jeder Verarbeitungseinheit in der Pipeline des RISC-Prozessors jeweils der Adress- und der Datentyp der aktuellen Daten (Load-, Store- oder Obcode) angezeigt.

Bei einem Execute- und Jump-Kommando CMD0 werden die auf dem Adressenbus des ersten Bussystems transportierten Opcode-Adressen Daten in einem ersten Register REG1 des Registerfiles RF zwischengespeichert, um im nachfolgenden Verarbeitungsschritt über eine nicht belegte Datenverbindungsleitung zur Debug-Schnittstelleneinheit DI weiter gereicht zu werden. Der freie Datenverbindungsweg erstreckt sich in diesem Fall über die Register-Read-Einheit RR zum ersten Register SRC der Execute-Einheit E.
Zu den im ersten Register SRC der Execute-Einheit E zwischengespeicherten Opcode-Adressen und den in der Execute-Einheit E gebildeten Ergebnisdaten, die in einem zweiten Register ALU der Execute-Einheit E zwischengespeichert werden, werden zusätzlich noch das dazugehörige, im Instruction-Decoder ID gebildete Execute- und Jump-Kommando CMD0 über die Pipeline des RISC-Prozessors an die in der Debug-Schnittstelleneinheit DI weitergeleitet. Gesteuert durch das Execute- oder Jump-Kommando CMD0 wird ein erster und zweiter Multiplexer MU1, MU2 und die in der Datentransfereinheit DT integrierten Debug-Schnittstelleneinheit DI derart angesteuert, daß die im ersten Register SRC der Execute-Einheit E zwischengespeicherten Opcode-Adressen durch den zweiten Multiplexer MU2 ausgegeben und am ersten Multiplexer MU1 die im zweiten Register ALU der Execute-Einheit E zwischengespeicherten Ergebnisdaten ausgegeben werden. In der Debug-Schnittstelleneinheit DI werden die Ergebnisdaten in einem Datenregister RD, die Opcode-Adressen in einem Adressregister RA und die Kommandodaten in einem Kommandoregister RC zwischengespeichert. In der nachfolgenden Taktperiode werden die in den Registern RD, RC, RA zwischengespeicherten Daten über Anschlußleitungen zu einer extern an den RISC-Prozessor angeordneten, hier nicht explizit dargestellten elektrischen Einheit zur Ausgabe auf einem Display weitergeleitet. Die Kommandodaten werden über eine Kommandodatenverbindungsleitung sowie die Ergebnisdaten über eine Datenverbindungsleitung zur Abspeicherung an die Read-Write-Einheit RW weitergereicht.

Bei einem Load-Kommando Load CMD1 wird die Quelladresse aus dem zweiten Register ALU der Execute-Einheit E sowie das Load-Kommando CMD1 an die Datentransfereinheit DT weitergeleitet. In der Datentransfereinheit DT werden die Quelldaten, die im zweiten Register ALU der Execute-Einheit E zwischengespeichert waren, auf dem Adressbus zur Ein- und Ausgabeeinheit I gegeben sowie gesteuert durch das ebenfalls an der Debug-Schnittstelleneinheit DI anliegende Load-Kommando CMD1 über den zweiten Multiplexer MU2 der Debug-Schnittstelleneinheit DI zum Adressregister RA der Debug-Schnittstelleneinheit DI weitergeleitet. Die über den Datenbus zwischen der Ein- und Ausgabeeinheit I und der Datentransfereinheit DT eingelesenen Quelldaten werden, gesteuert durch das Load-Kommando CMD1, über den ersten Multiplexer MU1 der Debug-Schnittstelleneinheit DI weiter an das Datenregister RD der Debug-Schnittstelleneinheit DI geleitet. In der nachfolgenden Taktperiode wird das Load-Kommando CMD1 im Kommando-Register RC, die Quelladresse im Adressenregister RA sowie die Quelldaten im Datenregister RD zur Ausgabe an die externe Einheit weitergereicht. Die Kommando- und Quelldaten werden zudem an die der Datentransfereinheit DT nachgeordneten Register Write-Einheit RW weitergereicht.

Das Store-Kommando CMD2 wird, angestoßen durch den Programm-Counter PCT im Sequenz-Controller SC, in dem Instruction-Decoder ID gebildet. Durch das Store-Kommando CMD2 werden aus einem zweiten Register REG2 im Registerfile RF die Zieldaten ausgelesen. Die ausgelesenen Zieldaten werden in das erste Register SRC der Register-Read Einheit RR geladen. In der nächsten Taktperiode gelangen die Zieldaten aus einem Register SRC der Register-Read Einheit RR in ein Register SRC der Execute-Einheit E. Zeitgleich wird das zu den Zieldaten gehörende Store-Kommando CMD2 über einen eigenen Kommando-Bus an die Execute-Einheit E übertragen. Die in der Execute-Einheit E gebildete Zieladresse, die in einem weiteren Register ALU der Execute-Einheit E zwischengespeichert war, wird mit dem Inhalt des Registers SRC und dem Store-Kommando CMD2 im nächsten Verarbeitungsschritt an die Datentransfereinheit DT weitergereicht. In der Datentransfereinheit DT werden die Daten in der Debug-Schnittstelleneinheit DI über den ersten und zweiten Multiplexer MU1, MU2 ausgekreuzt. Die Zieldaten, die aus dem zweiten Register REG2 im Registerfile RF ausgelesen wurden und im Register SRC der Execute-Einheit E zwischengespeichert waren, werden durch das am ersten Multiplexer MU1 anliegende Store-Kommando CMD2 in dem Datenregister RD zwischengespeichert. Die Zieladresse, die im Register ALU zwischengespeichert war, wird ebenfalls über das am zweiten Multiplexer MU2 anliegende Store-Kommando CMD2 an das Adressregister RA weitergereicht und dort zwischengespeichert. In der nächsten Taktperiode werden die in den Registern RA, RC und RD zwischengespeicherten Daten zur Ausgabe an die externe Leseeinheit oder zu der der Datentransfereinheit DT nachfolgenden Register-Write Einheit RW weitergeleitet.

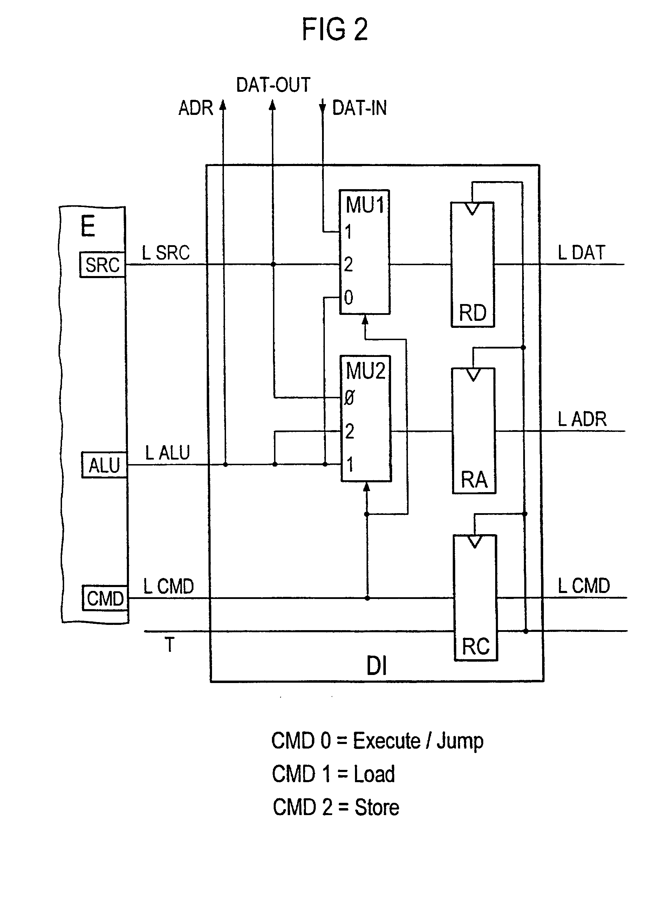

In Figur 2 ist die in der Datentransfereinheit DT integrierte Debug-Schnittstelleneinheit DI dargestellt. Diese Debug-Schnittstelleneinheit DI ist eingangsseitig mit den Ausgängen der Register SRC, ALU und CMD der Execute-Einheit E sowie mit einer den Takt weiterleitenden Verbindungsleitung verbunden. Ausgangsseitig ist die Debug-Schnittstelleneinheit DI mit der Register-Write Einheit RW über die mit LDAT bezeichnete Datenleitung sowie eine mit LCMD bezeichnete Kommandoleitung verbunden. Die Debug-Schnittstelleneinheit DI ist über eine Adressleitung LADR, der Datenleitung LDAT sowie Kommandoleitung LCMD mit einer Leseeinheit außerhalb der Pipeline verbunden. Diese Leseeinheit ermöglicht es einem Betreiber auf einfachste Weise einen Zugang zu Daten von Verarbeitungsprozessen innerhalb des RISC-Prozessors.

In dieser Leseeinheit kann dann zu den Opcode-Adressen bei einem Execute- oder Jump-Kommando aus einer Listing-Datei der Opcode jeweils ergänzt werden.

In der Debug-Schnittstelleneinheit DI ist der erste und zweite Multiplexer MU1, MU2 angeordnet. Gesteuert werden die Multiplexer durch Kommandodaten CMD0, CMD1 und CMD2, die auf der Kommandoleitung LCMD anliegen. Eine erste Datenleitung LSRC verbindet den Ausgang des Registers SRC der Execute-Einheit E mit einem zweiten Eingang 2 des ersten Multiplexers MU1, einem ersten Eingang 0 des zweiten Multiplexers MU2 und dem Datenbus DAT der Ein-Ausgabeeinheit I. Mit einer zweiten Datenleitung LALU wird vom Ausgang des Registers ALU der Execute-Einheit E eine Verbindung zu einem dritten Eingang 0 des ersten Multiplexers MU1, einem zweiten Eingang 1 des zweiten Multiplexers MU2 und dem Adreßbus ADR, der zur Ein-Ausgabeeinheit I führt, hergestellt. Der Ausgang des ersten Multiplexers MU1 ist mit dem Datenregister RD und der Ausgang des zweiten Multiplexers MU2 ist mit dem Adreßregister RA verbunden. Damit die Kommandodaten CMD0, CMD1 und CMD2 zeitgleich mit den Registerdaten des Datenregisters RD und Adreßregisters RA an der Read-Write Einheit RW anliegen, werden die Kommandodaten ebenso in dem Kommandoregister RD zwischengespeichert.

Liegt beispielsweise am Steuereingang des ersten und zweiten Multiplexers MU1, MU2 ein Execute- oder Jump-Kommando CMD0 so werden die Registerdaten des zweiten Registers ALU der Execute-Einheit E über der ersten Multiplexer MU1 an das Datenregister RD weitergeleitet.

Bei einem Load-Kommando CMD1 werden die über die Ein-Ausgabe-Einheit I einzulesenden Daten über den ersten Multiplexer MU1 an das Datenregister RD und die im zweiten Register ALU der Execute-Einheit E zwischengespeicherten Daten über den zweiten Multiplexer MU2 an das Adreßregister RA weitergereicht.

Bei einem Store-Kommando CMD2 werden die Daten des ersten Registers SRC in der Execute-Einheit E über den ersten Multiplexer MU1 und die Daten aus dem zweiten Register ALU der Execute-Einheit E über den zweiten Multiplexer MU2 an das nachfolgende Register weitergeleitet.

## Patentansprüche

1. Verfahren zum Mitlesen von Daten, die auf einem zwischen einem Sequenz-Controller (SC) und einem Instruction-Decoder (ID) in einem RISC-Prozessor angeordneten Bussystem ausgetauscht werden,
**dadurch gekennzeichnet,**
**daß** pro Takteinheit die vom Sequenz-Controller (SC) abgegebenen Daten auch in einem ersten Register (REG1), und die vom Instruction-Decoder (ID) abgegebene Daten auch in einem zweiten Register (REG2) des RISC-Prozessors zwischengespeichert werden,
**daß** bei einem ersten Kommando (CMD0) des Instruction-Decoders (ID) die aus dem ersten Register (REG1) oder bei einem zweiten Kommando (CMD2) die in dem zweiten Register (REG2) zwischengespeicherten Daten ausgelesen und über eine zwischen dem Instruction-Decoder (ID) und einer Execute-Einheit (E) angeordneten Register-Read Einheit (RR) in einem Register (SRC) der Execute-Einheit (E) zwischengespeichert werden,
**daß** die im Register (SRC) der Execute-Einheit (E) zwischengespeicherten Daten gleichzeitig mit den in der Execute-Einheit (E) ermittelten weiteren Daten sowie die zugehörigen Kommandos (CMD0, CMD1, CMD2) an eine der Execute-Einheit (E) nachgeordneten Datentransfereinheit (DT) gleichzeitig weitergeleitet werden, und
**daß** die der Datentransfereinheit (DT) zugeleiteten Daten pro Takteinheit jeweils definierten Datenausgängen der Datentransfereinheit (DT) zugeordnet werden.

2. Schaltungsanordnung zum Mitlesen von Daten die auf einem zwischen einem Sequenz-Controller (SC) und einem Instruction-Decoder (ID) in einem RISC-Prozessor angeordneten Bussystem ausgetauscht werden,
**dadurch gekennzeichnet,**
**daß** ein erstes Register (REG1) zur Zwischenspeicherung der vom Sequenz-Controller (SC) abgegebenen Daten und ein zweites Register (REG2) im RISC-Prozessor zur Zwischenspeicherung der vom Instruction-Controller (ID) abgegebenen Daten vorgesehen ist,
**dass** eine zwischen dem Instruction-Decoder (ID) und einer Execute-Einheit (E) angeordnete Register-Read Einheit (RR)ein Register (SRC) zur Zwischenspeicherung umfasst, wobei bei einem ersten Kommando (CMD0) des Instruction-Decoders (ID) die aus dem ersten Register (REG1) oder bei einem zweiten Kommando (CMD2) die in dem zweiten Register (RIG2) zwichengespeicherten Daten ausgelesen werden und über die Register-Read Einheit in einen Register (SRC) der Execute-Einheit (E) zwischengespeichert werden, und
das eine Schnittstelleneinheit (DI) in einer der Execute-Einheit (E) nachgeordneten Datentransfereinheit (DT) zur Zuordnung der gleichzeitig an der Datentransfereinheit (DT) anliegenden Daten zu definierten Datenausgängen der Datentransfereinheit (DT) vorgesehen ist.

3. Schaltungsanordnung nach Anspruch 2,
**dadurch gekennzeichnet,**
**daß** in der Schnittstelleneinheit (DI) ein erster und zweiter Multiplexer (MU1, MU2) angeordnet ist, die nach Maßgabe von Kommandodaten (CMD0, CMD1, CMD2) die an dem ersten und zweiten Eingang der Datentransfereinheit (DT) anliegenden Daten aus Registern (SRC, ALU) der Execute-Einheit (E) weiterleiten.

4. Schaltungsanordnung nach Anspruch 2,
**dadurch gekennzeichnet,**
**daß** das erste und zweite Register (REG1, REG2) in einem Registerfile (RF) des RISC-Prozessors angeordnet ist.

## Claims

1. Method for concomitantly reading data which are interchanged on a bus system arranged between a sequence controller (SC) and an instruction decoder (ID) in a RISC processor,
**characterized**
**in that**, for each clock unit, the data which are output by the sequence controller (SC) are also buffer-stored in a first register (REG1) and the data which are output by the instruction decoder (ID) are also buffer-stored in a second register (REG2) in the RISC processor,
**in that**, on a first command (CMD0) from the instruction decoder (ID), the data buffer-stored from the first register (REG1) are read, or, on a second command (CMD2), the data buffer-stored in the second register (REG2) are read, and are buffer-stored via a register-read unit (RR), arranged between the instruction decoder (ID) and an execute unit (E), in a register (SRC) in the execute unit (E),
**in that** the data buffer-stored in the register (SRC) in the execute unit (E) are forwarded, simultaneously with the further data ascertained in the execute unit (E), and the associated commands (CMD0, CMD1, CMD2) are simultaneously forwarded to a data transfer unit (DT) arranged downstream of the execute unit (E), and
**in that** the data supplied to the data transfer unit (DT) are assigned to respectively defined data outputs of the data transfer unit (DT) for each clock unit.

2. Circuit arrangement for concomitantly reading data which are interchanged on a bus system arranged between a sequence controller (SC) and an instruction decoder (ID) in a RISC processor,
**characterized**
**in that** a first register (REG1) is provided for buffer-storing the data which are output by the sequence controller (SC), and a second register (REG2) in the RISC processor is provided for buffer-storing the data which are output by the instruction controller (ID),
**in that** a register-read unit (RR) arranged between the instruction decoder (ID) and an execute unit (E) comprises a register (SRC) for buffer storage, where, on a first command (CMD0) from the instruction decoder (ID), the data buffer-stored from the first register (REG1) are read, or, on a second command (CMD2), the data buffer-stored in the second register (REG2) are read, and are buffer-stored via the register-read unit in a register (SRC) in the execute unit (E), and
**in that** an interface unit (DI) is provided in a data transfer unit (DT), arranged downstream of the execute unit (E), for assigning the data simultaneously present on the data transfer unit (DT) to defined data outputs of the data transfer unit (DT).

3. Circuit arrangement according to Claim 2,
**characterized**
**in that** the interface unit (DI) contains a first and a second multiplexer (MU1, MU2) which forward the data present at the first and second inputs of the data transfer unit (DT) from registers (SRC, ALU) in the execute unit (E) as stipulated by command data (CMD0, CMD1, CMD2).

4. Circuit arrangement according to Claim 2,
**characterized**
**in that** the first and second registers (REG1, REG2) are arranged in a register file (RF) in the RISC processor.

## Revendications

1. Procédé de contrôle de données, qui sont échangées sur un système de bus placé dans un processeur RISC entre un contrôleur séquentiel (SC) et un décodeur d'instruction (ID),
**caractérisé en ce que,** par unité de cycle, les données délivrées par le contrôleur séquentiel (SC) sont stockées temporairement dans un premier registre (REG1), et les données délivrées par le décodeur d'instruction (ID) sont aussi stockées temporairement dans un second registre (REG2) du processeur RISC,
**en ce que,** dans une première commande (CMD0) du décodeur d'instruction (ID), les données stockées temporairement dans le premier registre (REG1), ou, dans une deuxième commande (CMD2), les données stockées temporairement dans le second registre (REG2), sont extraites et stockées temporairement dans un registre (SRC) d'une unité d'exécution (E) à l'aide d'une unité registre-lecture (RR) placée entre le décodeur d'instruction (ID) et l'unité d'exécution (E),
**en ce que** les données stockées temporairement dans le registre (SRC) de l'unité d'exécution (E) sont réacheminées vers une unité de transfert de données (DT) placée en aval de l'unité d'exécution (E), simultanément aux autres données définies dans l'unité d'exécution (E) ainsi que simultanément aux commandes correspondantes (CMD0, CMD1, CMD2), et
**en ce que** les données transmises vers l'unité de transfert de données (DT) par unité de cycle sont toutes classées comme des sorties de données définies de l'unité de transfert de données (DT).

2. Circuit pour le contrôle de données, qui sont échangées sur un système de bus placé dans un processeur RISC entre un contrôleur séquentiel (SC) et un décodeur d'instruction (ID),
**caractérisée en ce qu**'un premier registre (REG1) est prévu pour le stockage temporaire des données délivrées par le contrôleur séquentiel (SC) et dans le processeur RISC un second registre (REG2) est prévu pour le stockage temporaire des données délivrées par le décodeur d'instruction (ID),
**en ce qu'une** unité registre-lecture (RR), placée entre le décodeur d'instruction (ID) et une unité d'exécution (E), comprend un registre (SRC) pour le stockage intermédiaire, les données stockées temporairement dans le premier registre (REG1) étant extraites lors d'une première commande (CMD0) du décodeur d'instruction (ID), ou les données stockées temporairement dans le second registre (REG2) étant extraites lors d'une deuxième commande (CMD2), et stockées temporairement dans un registre (SRC) de l'unité d'exécution (E) à l'aide de l'unité registre-lecture, et
**en ce qu**'une unité d'interface (DI) est prévue, dans une unité de transfert de données (DT) placée en aval de l'unité d'exécution (E), pour attribuer les données adjacentes aux sorties de données définies de l'unité de transfert de données (DT), simultanément à l'unité de transfert de données (DT),.

3. Circuit selon la revendication 2, **caractérisée en ce qu**'un premier et un second multiplexeurs (MU1, MU2) sont placés dans l'unité d'interface (DI), ces multiplexeurs réacheminent à partir des registres (SRC, ALU) de l'unité d'exécution, les données adjacentes à la première et à la deuxième entrée de l'unité de transfert de données (DT), conformément aux données de commande (CMD0, CMD1, CMD2).

4. Circuit selon la revendication 2, **caractérisée en ce que** le premier et le second registres (REG1, REG2) sont placés dans un fichier registre (RF) du processeur RISC.
